# EUROPEAN PATENT APPLICATION

(11) **EP 2 644 411 A1**
(43) Date of publication of application: **02.10.2013**
(21) Application number: 13161333.3
(22) Date of filing: 27.03.2013
(51) Int. Cl.: B60C 23/04

(54) **Apparatus for monitoring tire conditions and method thereof**

(30) Priority: 30.03.2012 KR 20120033236
(71) Applicant: Samsung Electro-Mechanics Co., Ltd, Suwon Gyunggi-do 443-743 (KR)
(72) Inventor: Lee, Kyung No, 443-743 Gyunggi-do (KR); Han, Jong Woo, 443-743 Gyunggi-do (KR); Song, Jong Hyeong, 443-743 Gyunggi-do (KR); Han, Won, 443-743 Gyunggi-do (KR); Hyun, Hae Seung, 443-743 Gyunggi-do (KR)
(74) Representative: Heine, Christian Klaus

(57) **Abstract**

Disclosed are an apparatus for monitoring tire conditions and a method thereof. The apparatus for monitoring tire conditions includes a plurality of transmitters transmitting condition report signals that do not include a measured internal condition, when the plurality of transmitters measure an internal condition of tires to determine that a change in the internal condition of the tires is in a predetermined range; and a receiver determining the internal condition of the tires previously transmitted by the corresponding transmitters as a current internal condition, when the receiver receives the condition report signals that do not include the internal condition transmitted from the transmitters.

## Description

### CROSS REFERENCE TO RELATED APPLICATION

This application claims the benefit of Korean Patent Application No. 10-2012-0033236, filed on March 30, 2012, entitled "Condition Monitoring Apparatus For Tire And Method Thereof" which is hereby incorporated by reference in its entirety into this application.

### BACKGROUND OF THE INVENTION

### 1. Technical Field

The present invention relates to an apparatus for monitoring tire conditions and a method thereof.

### 2. Description of the Related Art

An apparatus for monitoring tire conditions is an apparatus that monitors a tire air pressure of a driving vehicle in real time to inform a driver of information about tire conditions in real time.

The apparatus for monitoring tire conditions uses an indirect scheme based on ABS and a direct scheme directly mounting sensors in tires for a vehicle.

In the apparatus for monitoring tire conditions using the indirect scheme, a tire pressure condition is monitored by using a principle of relatively increasing a rotating speed of the tire with the decrease in a valid radius of the tire when pressure of any one of the tires is reduced.

However, the indirect scheme may frequently issue false warning due to an excessive measuring error and perform only a relative comparison of pressure, such that the use thereof is gradually reduced.

On the other hand, the apparatus for monitoring tire conditions using the direct scheme senses an actual tire pressure and temperature of a driving vehicle by directly inserting sensors into tires of a vehicle and calculates a temperature-compensated pressure value from the sensed pressure and temperature to provide information about the detected tire condition to a driver, thereby increasing measurement accuracy of the tire pressure.

Schematically describing wireless transmitting and receiving components of the apparatus for monitoring tire conditions using the direct scheme according to the prior art, the sensors are mounted in each of the four tires and signals of the temperature and pressure value measured by the sensors are transmitted to a single receiver mounted at central portion of a car body.

In the apparatus for monitoring tire conditions, a position of the single receiver is far away from transmitters that are inserted into each tire.

Therefore, in order to accurately transmit the signals to the receiver, the transmitters need to strongly transmit the signals and as a result, a battery that is a power supply for the transmitters may be rapidly consumed.

In order to solve the problems, the apparatus for monitoring tire conditions for increasing signal receiving efficiency from the transmitters mounted in the tires by individually mounting the receivers of the apparatus for monitoring tire conditions around each tire and reducing power consumed to transmit the signals has been developed.

However, the apparatus for monitoring tire conditions still has a problem caused due to a distance between the transmitter and the receiver since the receiver is still mounted in a frame of a vehicle, or the like. In order to separately mount the receivers around each tire, separate wirings and mounting parts may be needed and manufacturing and mounting costs may be increased.

Meanwhile, in order to solve the problem that a power supply (battery) for the transmitter is rapidly consumed in the apparatus for monitoring tire conditions using the direct scheme, the apparatus for monitoring tire conditions capable of saving power by allowing the receiver to receive information about a motion of a vehicle from a wheel speed sensor of a vehicle to turn-on/off the transmitters inserted into the tires according to a driving condition of a vehicle has been recently developed.

However, even in the case of the apparatus for monitoring tire conditions, the receiver and the wheel speed sensor of a vehicle are separately mounted, such that wirings needed to exchange the vehicle travelling information may be complicated and an electronic control unit (ECU) of the apparatus for monitoring tire conditions and the ECU of the wheel speed sensor of a vehicle need to be separately mounted, such that manufacturing costs may be increased.

### [Prior Art Document]

### [Patent Document]

### (Patent Document 1) Korean Patent No. 10-0780536

### SUMMARY OF THE INVENTION

The present invention has been made in an effort to provide an apparatus for monitoring tire conditions and a method thereof capable of saving battery consumption by transmitting abbreviation type condition report signals having the reduced data size when a currently measured condition of tires is the same or similar as or to a previously measured condition of tires.

According to a preferred embodiment of the present invention, there is provided an apparatus for monitoring tire conditions, including: a plurality of transmitters transmitting condition report signals that do not include a measured internal condition, when the plurality of transmitters measure an internal condition of tires to determine that a change in the internal condition of the tires is in a predetermined range; and a receiver determining the internal condition of the tires previously transmitted by the corresponding transmitters as a current internal condition, when the receiver receives the condition report signals that do not include the internal condition transmitted from the transmitters.

The apparatus for monitoring tire conditions may further include: a display displaying the internal condition of the tires, wherein the receiver provides the determined internal condition to the display so as to be displayed.

The internal condition may include air pressure and temperature.

When the transmitters measure the internal condition of the tires to determine that the change in the internal condition of the tires is out of a predetermined range, the transmitters may transmit the condition report signals including the measured internal condition, and when the receiver receives the condition report signal including the internal condition transmitted from the transmitters, the receiver may determine the received internal condition as a current internal condition.

The transmitters may include: a plurality of sensors measuring the internal condition of the tires; when the internal condition measured by the plurality of sensors compares with a reference value to determine that the measured internal condition is out of a predetermined range, a transmitting controller outputting the measured internal condition and chip identifiers and when the measured internal condition is in the predetermined range, outputting the chip identifiers; and when the internal condition and the chip identifiers are output from the transmitting controller, a transmitting circuit generating and transmitting the condition report signals including the internal condition and when the chip identifiers are output, generating and transmitting the condition report signals that do not include the internal condition.

The receiver may include: a receiving circuit receiving the condition report signals from the transmitters and demodulating, decoding, and outputting the received condition report signals; and a receiving controller determining the included internal condition as the current internal condition when the condition report signals demodulated and decoded by the receiving circuit include the internal condition, and determining the previously transmitted internal condition of the tires as the current internal condition when the condition report signals do not include the internal condition.

The transmitters may measure the internal condition of the tires to determine that the change in the internal condition of the tires is in a predetermined range when the change in the condition of the tires is ± 5% or less.

The transmitters may include: a plurality of sensors measuring the internal condition of the tires; when the internal condition measured by the plurality of sensors compares with a reference value to determine that the measured internal condition is in a predetermined range, a transmitting controller outputting chip identifiers; and when the chip identifiers are output from the transmitting controller, a transmitting circuit generating and transmitting the condition report signals that do not include the internal condition.

The receiver may include: a receiving circuit receiving the condition report signals that do not include the internal condition transmitted from the transmitters and demodulating, decoding, and outputting the received condition report signals; and a receiving controller receiving the condition report signals that do not include the internal condition demodulated and decoded by the receiving circuit to allow the corresponding transmitters to determine the previously transmitted internal condition of the tires as the current internal condition.

According to another preferred embodiment of the present invention, there is provided a method for monitoring tire conditions, including: (A) when transmitters measure an internal condition of tires to determine that a change in the internal condition of the tires is in a predetermined range, transmitting condition report signals that do not include a measured internal condition; and (B) when the receiver receives the condition report signals that do not include the internal condition transmitted from the transmitters, determining the internal condition of the tires previously transmitted by the corresponding transmitters as a current internal condition.

The method for monitoring tire conditions may further include: (C) displaying, by a display, the internal condition determined by the receiver.
(A) The transmitting of the condition report signals may include: (A-1) measuring the internal condition of the tires by the plurality of sensors; (A-2) outputting chip identifiers by a transmitting controller when the internal condition measured by a plurality of sensors is in a predetermined range; and (A-3) generating and transmitting the condition report signals that do not include the internal condition by a transmitting circuit when the chip identifiers are output from the transmitting controller.
(B) The determining of the internal condition may include: (B-1) receiving the condition report signals from the transmitters and demodulating, decoding, and outputting the received condition report signals by a receiving circuit; and (B-2) determining the previously transmitted internal condition of the tires as the current internal condition by a receiving controller, when the condition report signals demodulated and decoded by the receiving circuit do not include the internal condition.

The method for monitoring tire conditions may further include: (D) when the transmitters measure the internal condition of tires to determine that the change in the internal condition of the tires is out of a predetermined range, transmitting condition report signals that include the measured internal condition; and (E) when the receiver receives the condition report signals that include the internal condition transmitted from the transmitters, determining the received internal condition as the current internal condition.
(D) The transmitting of the condition report signals may include: (D-1) measuring the internal condition of the tires by a plurality of sensors; (D-2) outputting the measured internal condition and the chip identifiers by a transmitting controller when the internal condition measured by the plurality of sensors is out of a predetermined range; and (D-3) generating and transmitting the condition report signals including the internal condition by a transmitting circuit when the internal condition and the chip identifiers are output from the transmitting controller.
(E) The determining of the received internal condition may include: (E-1) receiving, demodulating, decoding, and outputting the condition report signals from the transmitters by the receiving circuit; and (E-2) when the condition report signals demodulated and decoded by the receiving circuit include the internal condition, determining the included internal condition as the current internal condition by the receiving controller.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a configuration diagram of an apparatus for monitoring tire conditions according to a preferred embodiment of the present invention;
FIG. 2 is a detailed block configuration diagram of a transmitter of FIG. 1;
FIG. 3 is a data format of abbreviation type condition report signals transmitted by the transmitter of FIG. 1;
FIG. 4 is condition report signals transmitted by the transmitter of FIG. 1;
FIG. 5 is a detailed block configuration diagram of a receiver of FIG. 1;
FIG. 6 is a flow chart of a method for monitoring tire conditions according to another preferred embodiment of the present invention;
FIG. 7 is a detailed flow chart of a process of transmitting signals of the transmitter of FIG. 6; and
FIG. 8 is a detailed flow chart of a process of receiving the signals of the receiver of FIG. 6.

### DESCRIPTION OF THE PREFERRED EMBODIMENTS

The objects, features, and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the prior art would obscure the gist of the present invention, the description thereof will be omitted.

Hereinafter, preferred embodiments of the present invention will be described in detail with reference to the attached drawings.

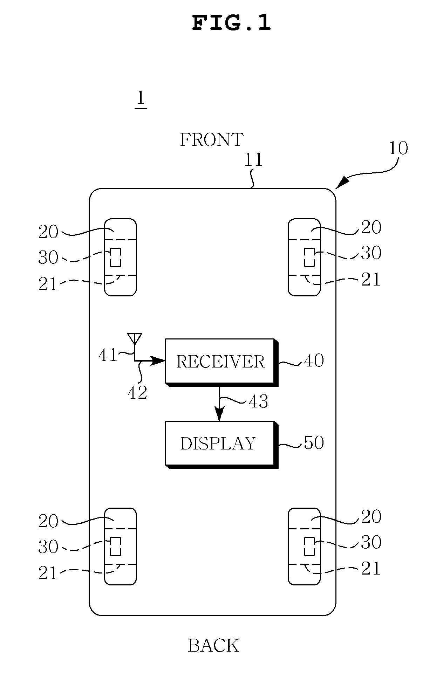

FIG. 1 is a configuration diagram of an apparatus for monitoring tire conditions according to a preferred embodiment of the present invention.

Referring to FIG. 1, an apparatus 1 for monitoring tire conditions includes four transmitters 30 and one receiver 40.

Each transmitter 30 is associated with each of the four tires 20 of a vehicle 10. The receiver 40 is mounted in a body 11 of a vehicle 10.

Each transmitter 30 is fixed to wheels 21 so that the transmitters 30 are positioned at the corresponding tires 20. Each transmitter 30 measures parameters showing a condition of the corresponding tires 20, that is, air pressure or temperature of the tires 20, and the like, in the preferred embodiment of the present invention.

Next, the transmitters 30 wirelessly transmit condition report signals including the air pressure, the temperature, or the like, obtained from the measurement to the receiver 40.

In this case, the transmitters 30 changes the condition report signals when the measured air pressure or temperature is the same or similar as or to the previously measured air pressure or temperature (herein, referred to as a reference value because being compared with air pressure or temperature to be measured later) to transmit abbreviation type condition report signals having a reduced data length.

To this end, the transmitter 30 sets newly measured air pressure or temperature as a new reference value for comparing with the air pressure or the temperature to be measured later when the air pressure or the temperature to be measured later is out of a predetermined range from the air pressure or the temperature set as the reference value (for example, when being out of ± 5%).

For example, when the previously measured air pressure set as the reference value is 30 psi, if the air pressure measured later is in a range of -28.5 psi to 31.5 psi, the transmitter 30 continues to use the 30 psi as the reference air pressure and uses the newly measured air pressure as the new reference value when being out of a range of -28.5 psi to 31.5 psi.

Similarly, for example, when the previously measured temperature set as the reference value is 60 °C, if the air pressure measured later is in a range of -57 °C to 63 °C, the transmitter 30 continues to use the 60 °C as the reference temperature and uses the newly measured temperature as the new reference value when being out of a range of -57 °C to 63 °C.

Meanwhile, the receiver 40 is mounted at a predetermined position within the car body 11, for example, is supplied with power from a battery (not shown) that is positioned in the vehicle 10. A receiving antenna 41 is connected with the receiver 40 by a cable 42.

The cable 42 preferably is a coaxial cable that is not substantially affected by noise. The receiving antenna 41 of the receiver 40 receives the condition report signals from each transmitter 30.

More specifically, when one of the transmitters 30 wirelessly transmits the condition report signals to the receiver 40, the receiving antenna 41 induces voltage according to electric field strength of radio waves received from the transmitter 30.

Next, the receiving antenna 41 transmits a signal indicating the induced voltage to the receiver 40.

In this case, the receiver 40 receives the condition report signals from the transmitters 30 and displays the currently measured air pressure or temperature on a display 50.

In this case, when the receiver 40 receives the abbreviation type condition report signals having the reduced data length from the transmitters 30, it is understood that the currently measured air pressure or temperature is the same or similar as or to the previously measured air pressure or temperature. As a result, the air pressure or the temperature that is previously measured, transmitted, and stored is displayed on the display 50.

Meanwhile, the display 50 is mounted at a position that is seen by a driver of the vehicle 10. The display 50 is connected to the receiver 40 by a cable 43 and displays the air pressure or the temperature transmitted from the receiver 40.

According to the preferred embodiments of the present invention as described above, the transmitters 30 transmit the abbreviation type condition report signals having the reduced data length by changing the condition report signals when the measured air pressure or temperature is the same or substantially similar as or to the previously measured air pressure or temperature, thereby shortening data transmission time, or the like, to reduce the battery consumption and save power.

In addition, according to the preferred embodiments of the present invention, the battery consumption can be reduced and thus, the transmitters 30 can use a small-capacity battery.

Further, according to the preferred embodiments of the present invention, the small-capacity battery can be used and thus, the apparatus for monitoring tire conditions can be miniaturized.

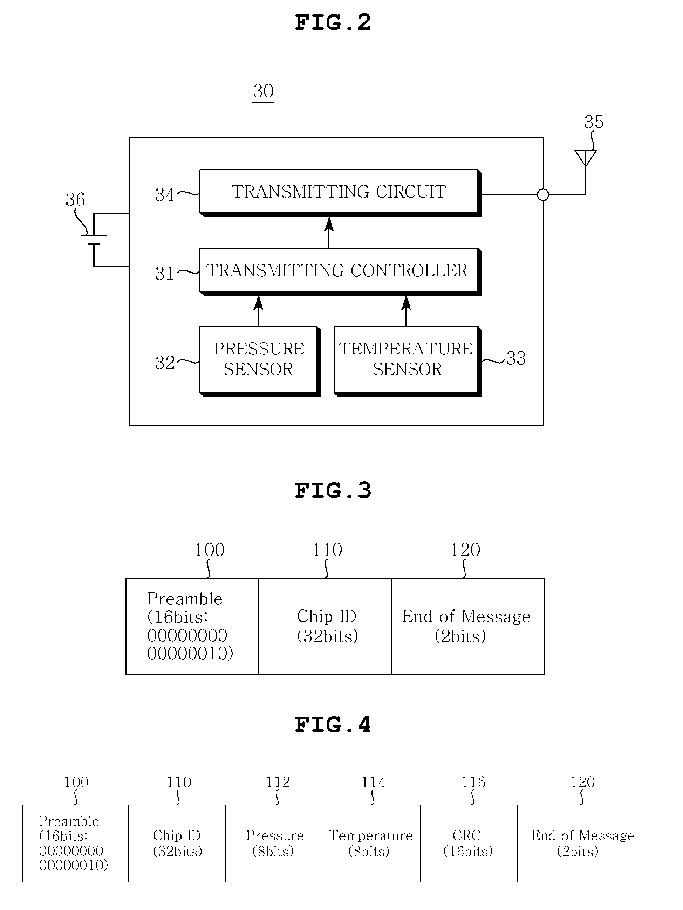

FIG. 2 is a detailed block configuration diagram of the transmitters of FIG. 1.

Referring to FIG. 2, the transmitter of FIG. 1 includes a transmitting controller 31, a pressure sensor 32, a temperature sensor 33, a transmitting circuit 34, an antenna 35, and a battery 36.

Herein, the transmitting controller 31 is formed by, for example, a microcomputer and includes a CPU, a ROM, an RAM, or the like.

The internal memory of the transmitting controller 31, for example, the ROM is previously registered with a chip identifier ID.

The chip identifier can allow the receiver 40 to identify each of the four transmitting units 30 corresponding to each tire 20.

The above-mentioned transmitting controller 31 supplies the air pressure and the temperature and the chip identifiers registered in the internal memory of the transmitter to the transmitting circuit 34.

In this case, the transmitting controller 31 supplies only the chip identifiers registered in the internal memory of the transmitter 30 to the transmitting circuit 34 when the measured air pressure and temperature is the same or similar as or to the previously measured air pressure and temperature (for example, considered as one similar to, for example, about ± 5%).

Meanwhile, the pressure sensor 32 measures the air pressure of the corresponding tires 20 and transmits the measured value to the transmitting controller 31.

Further, the temperature sensor 33 measures the temperature of the corresponding tires 20 and transmits the measured value to the transmitting controller 31.

Next, the transmitting circuit 34 encodes and modulates the air pressure, the temperature, and the chip identifiers that are transmitted from the transmitting controller 31. Next, the transmitting circuit 34 wirelessly transmits data by the transmitting antenna 35.

The battery 36 supplies power to the corresponding transmitter 30.

An operation of the transmitter configured as described above will be described as follows.

First, the pressure sensor 32 measures the air pressure of the tires at a predetermined time interval and supplies the measured air pressure to the transmitting controller 31.

In addition, the temperature sensor 33 measures the temperature of the tires at a predetermined time interval and supplies the measured temperature to the transmitting controller 31.

Next, the transmitting controller 31 determines whether the currently measured internal condition (for example, pressure, temperature, or the like) of the tires is the same or similar to the previously measured internal conditions (reference value) of the tires and if it is determined that the currently measured condition of the tires is the same or similar as or to the previously measured internal conditions of the tires, provides only the chip identifiers to the transmitting circuit 34.

When the transmitting circuit 34 receives only the chip identifiers from the transmitting controller 31, the transmitting circuit 34 generates the abbreviation type condition report signals having the reduced data length and transmits the generated abbreviation type condition report signals to the receiver through the antenna 35.

In this case, FIG. 3 shows the data format of the abbreviation type condition report signals used by the transmitting circuit 34. The data format shown in FIG. 3 includes a preamble field 100 of 16 bits, a chip identifier field 110 of 32 bits, and a message ending field 120 of 2 bits. In this case, the preamble field 100 includes a signal identification data (for example, 0*0002) to be able to identify that the transmitted wireless signal are the tire condition report signals and the chip identifier field 110 includes the chip identifiers capable of differentiating each transmitter, and the message ending field 120 includes data informing that the abbreviation type condition report signals end.

The abbreviation condition report signals has the length reduced by 32 bits (reduced by about 40%), as compared with the condition report signals to be described later.

Next, the transmitting controller 31 determines whether the currently measured internal condition (for example, pressure, temperature, or the like) of the tires is the same or similar to the previously measured internal conditions of the tires and if it is determined that the currently measured condition of tires is the same or similar as or to the previously measured internal conditions of the tires, provides only the measured air pressure, temperature, and chip identifiers to the transmitting circuit 34.

When the transmitting circuit 34 receives the measured air pressure, temperature, and chip identifiers from the transmitting controller 31, the transmitting circuit 34 generates the condition report signals and transmits the generated condition report signals to the receiver through the antenna 35.

In this case, FIG. 4 shows the data format of the condition report signals used by the transmitting circuit 34. The data format shown in FIG. 4 includes the preamble field 100 of 16 bits, the chip identifier field 110 of 32 bits, an air pressure field 112 of 8 bits, a temperature field 114 of 8bits, a CRC field 116 of 16bits, and a message ending field 120 of 2 bits.

In this case, the preamble field 100 includes a signal identification data (for example, 0*0001) to be able to identify that the transmitted wireless signals are the condition report signal of the tires and the chip identifier field 110 includes the chip identifiers capable of differentiating each transmitter, the air pressure field 112 includes the air pressure data, the temperature field 114 includes the temperature data, the CRC field 116 includes an error check data, and the message ending field 120 includes data informing that the condition report signals end.

In this case, the condition report signal has a 32 bits longer length than the above-mentioned abbreviation type condition report signal due to the air pressure field 112, the temperature field 114, and the CRC field 116.

According to the preferred embodiment of the present invention as described above, the transmitter controller 31 transmits the abbreviated type condition report signals having the reduced data length by changing the condition report signals when the measured air pressure or temperature is the same or substantially similar as or to the previously measured air pressure or temperature, thereby shortening data transmission time, or the like, to save the battery consumption of the transmitting circuit 34 and save power.

Therefore, according to the preferred embodiments of the present invention, the small-capacity battery can be used and thus, the apparatus for monitoring tire conditions can be miniaturized.

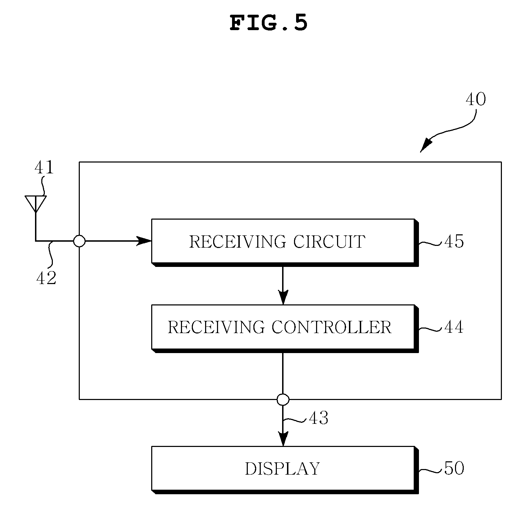

FIG. 5 is a detailed block configuration diagram of the receiver of FIG. 1.

Referring to FIG. 5, the receiver 40 includes a receiving controller 44 and a receiving circuit 45 that processes the signals received by the receiving antenna 41.

For example, the receiving controller 44 formed by a microcomputer includes a CPU, an ROM, and an RAM. The RAMS stores the chip identifiers that identify four transmitters 30 of a vehicle 10.

When one of the transmitters 30 transmits the condition report signals to the receiver 40, the receiving circuit 45 receives the condition report signals from the transmitters 30 by the receiving antenna 41.

Next, the receiving circuit 45 demodulates and decodes the received condition report signals and transmits the condition report signals to the receiving controller 44.

The receiving controller 44 determines the air pressure and the temperature of the tires 20 associated with the transmitters 30 transmitting the condition report signals based on the received condition report signals.

Next, the receiving controller 44 represents the air pressure and the temperature on the display 50. In particular, when the air pressure or the temperature of the tires 20 is not in a tolerable range, the receiving controller 44 represents warning on the display 50.

Meanwhile, when one of the transmitters 30 transmits the abbreviation type condition report signals to the receiver 40, the receiving circuit 45 receives the abbreviation type condition report signals from the transmitters 30 by the receiving antenna 41.

Next, the receiving circuit 45 demodulates and decodes the received condition report signals and transmits the abbreviation type condition report signals to the receiving controller 44.

The receiving controller 44 determines that the air pressure and the temperature of the tires 20 associated with the transmitters 30 transmitting the abbreviation type condition report signals are the same as the previously received air pressure and temperature, based on the received abbreviation type condition report signals.

Next, the receiving controller 44 represents the air pressure and the temperature that are determined on the display 50.

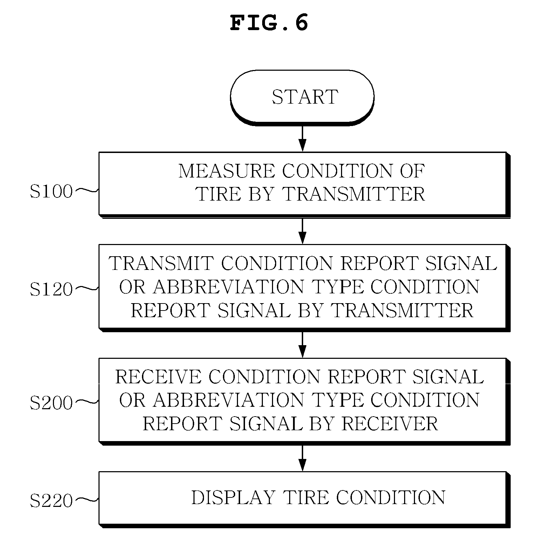

FIG. 6 is a flow chart of a method for monitoring tire conditions according to another preferred embodiment of the present invention.

Referring to FIG. 6, a method for monitoring tire conditions according to the preferred embodiment of the present invention first allows each transmitter to measure the parameters representing the condition of the corresponding tires 20, that is, the air pressure, the temperature, or the like, of the tires 20 in the preferred embodiment of the present invention (S100).

Next, the transmitters 30 wirelessly transmit the condition report signals including the air pressure, the temperature, or the like, obtained from the measurement to the receiver 40. In this case, the transmitters 30 transmits the abbreviation type condition report signals having the reduced data length by changing the condition report signals when the measured air pressure or temperature is the same or similar as or to the previously measured air pressure or temperature (S120).

Meanwhile, the receiver 40 receives the condition report signals or the abbreviation type condition report signals from the transmitters 30 (S200) and displays the tire condition on the display 50 (S220).

In this case, when the receiver 40 receives the condition report signals from the transmitters 30 (S200) and displays the currently measured air pressure or temperature on the display 50 (S220).

In this case, when the receiver 40 receives the abbreviated type condition report signals having the reduced data length from the transmitters 30 (S200), it is understood that the currently measured air pressure or temperature is the same or similar as or to the previously measured air pressure or temperature. As a result, the air pressure or the temperature that is previously measured, transmitted, and stored is displayed on the display 50 (S220).

According to the preferred embodiments of the present invention, the transmitter transmits the abbreviation type condition report signals having the reduced data length by changing the condition report signals when the measured air pressure or temperature is the same or substantially similar as or to the previously measured air pressure or temperature, thereby making it possible to shorten the data transmission time, or the like, to reduce the battery consumption and save power.

In addition, according to the preferred embodiments of the present invention, the battery consumption can be reduced and thus, the transmitter can use a small-capacity battery.

Further, according to the preferred embodiments of the present invention, the small-capacity battery can be used and thus, the apparatus for monitoring tire conditions can be miniaturized.

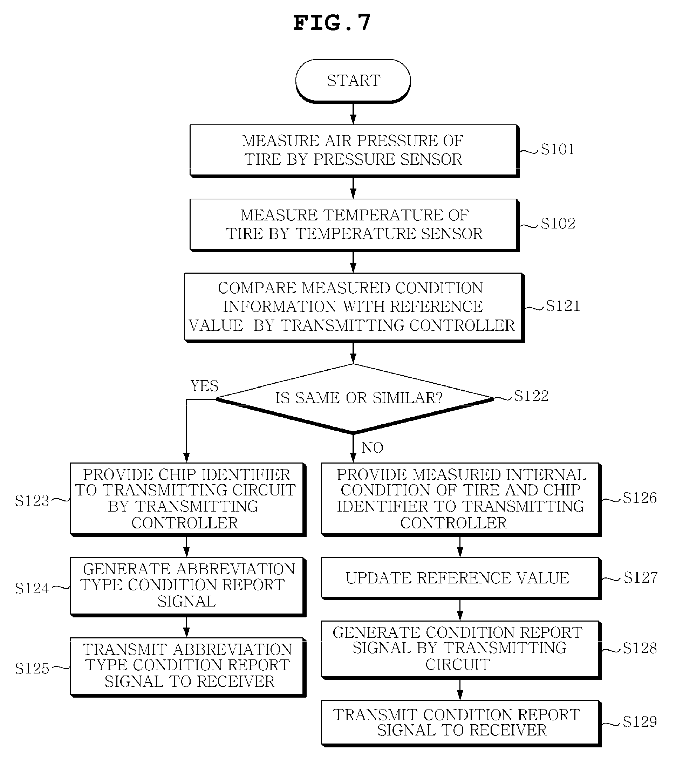

FIG. 7 is a detailed flow chart of a process of processing the signals of the transmitter of FIG. 6.

First, the pressure sensor 32 measures the air pressure of the tires at a predetermined time interval and provides the measured air pressure to the transmitting controller 31 (S101) and the temperature sensor 33 also measures the temperature of the tires at a predetermined time interval and provides the measured temperature to the transmitting controller 31 (S102).

In this case, the transmitting controller 31 compares the currently measured internal condition of the tires (for example, air pressure, temperature, or the like) with the previously measured internal condition of the tires (reference value) (S121) to determine whether the currently measured internal condition of the tires is the same or similar to the previously measured internal condition of the tires (S122).

The transmitting controller 31 provides only the chip identifiers to the transmitting circuit 34 if it is determined that the currently measured internal condition of the tires is the same or similar to the previously measured internal condition of the tires (S123).

In this case, the transmitting circuit 34 generates the abbreviation type condition report signals having the reduced data length (S124) and transmits the generated abbreviation type condition report signals to the receiver through the antenna 35 (S125).

Meanwhile, the transmitting controller 31 provides the currently measured internal condition of the tires (for example, air pressure, temperature, or the like) and the chip identifiers to the transmitting circuit 34 (S126) if it is determined that the currently measured internal condition of the tires is not the same or similar to the previously measured internal condition of the tires and updates the reference value by setting the currently measured internal condition of the tires as a new reference value (S127).

Next, the transmitting circuit 34 generates the condition report signals including the currently measured internal condition of the tires and the chip identifiers (S128) and transmits the generated condition report signals to the receiver through the antenna 35 (S129).

According to the preferred embodiment of the present invention as described above, the transmitter controller 31 transmits the abbreviated type condition report signals having the reduced data length by changing the condition report signals when the measured air pressure or temperature is the same or substantially similar as or to the previously measured air pressure or temperature, thereby shortening data transmission time, or the like, to save the battery consumption of the transmitting circuit 34 and save power.

Therefore, according to the preferred embodiments of the present invention, the small-capacity battery can be used and thus, the apparatus for monitoring tire conditions can be miniaturized.

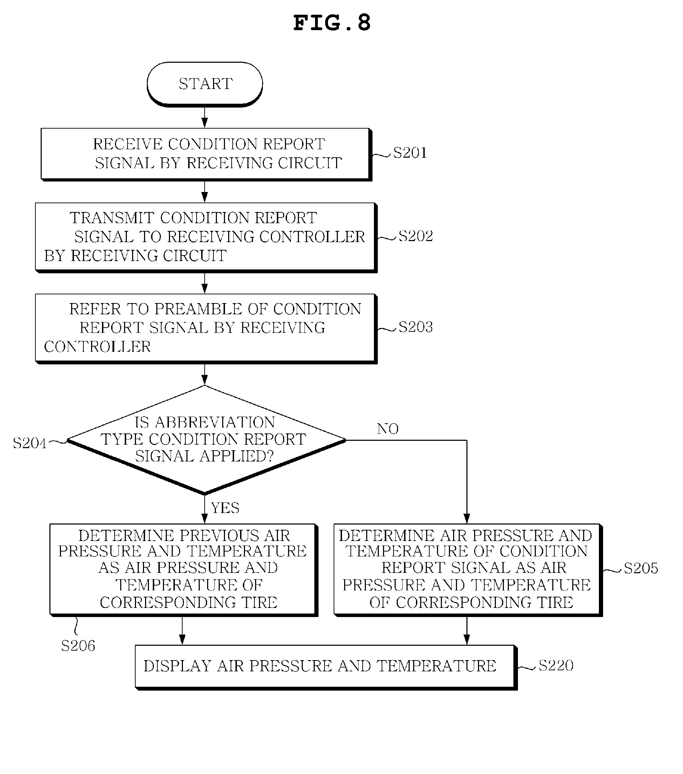

FIG. 8 is a detailed flow chart of a process of receiving the signals of the receiver of FIG. 6.

Referring to FIG. 8, a process of processing the signals of the receiver of FIG. 6 first allows the receiving circuit 45 to receive the condition report signals from the transmitter 30 by the receiving antenna 41 when one of the transmitters 30 first transmits the condition report signals to the receiver 40 (S201).

Next, the receiving circuit 45 demodulates and decodes the received condition report signals and transmits the condition report signals to the receiving controller 44 (S202).

The receiving controller 44 receives the condition report signals to determine whether the condition report signals are the abbreviation type condition report signals by referring to the preamble (S203) (S204).

If it is determined that the condition report signals are not the abbreviation type condition report signals, the receiving controller 44 determines the air pressure and the temperature of the tires 20 associated with the transmitters 30 transmitting the condition report signals based on the received condition report signals (S205).

Next, the receiving controller 44 represents the air pressure and the temperature on the display 50 (S220). In particular, when the air pressure or the temperature of the tires 20 is not in a tolerable range, the receiving controller 44 represents warning on the display 50.

Meanwhile, if it is determined that the condition report signals are the abbreviation type condition report signals, the receiving controller 44 determines that the air pressure and the temperature of the tires 20 associated with the transmitters 30 transmitting the abbreviation type condition report signals are the same as the previously received air pressure and temperature (S206).

Next, the receiving controller 44 represents the determined air pressure and temperature on the display 50 (S220).

According to the preferred embodiments of the present invention, the transmitter transmits the abbreviation type condition report signals having the reduced data length by changing the condition report signals when the measured air pressure or temperature is the same or substantially similar as or to the previously measured air pressure or temperature, thereby making it possible to shorten the data transmission time, or the like, reduce the battery consumption and save power.

In addition, according to the preferred embodiments of the present invention, the battery consumption can be reduced and thus, the transmitter can use a small-capacity battery.

Further, according to the preferred embodiment of the present invention, the small-capacity battery can be used and thus, the apparatus for monitoring tire conditions can be miniaturized, thereby making it possible to reduce the weight, size, costs, or the like.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. An apparatus for monitoring tire conditions, comprising:
a plurality of transmitters transmitting condition report signals that do not include a measured internal condition, when the plurality of transmitters measure an internal condition of tires to determine that a change in the internal condition of the tires is in a predetermined range; and
a receiver determining the internal condition of the tires previously transmitted by the corresponding transmitters as a current internal condition, when the receiver receives the condition report signals that do not include the internal condition transmitted from the transmitters.

2. The apparatus as set forth in claim 1, further comprising: a display displaying the internal condition of the tires, wherein the receiver provides the determined internal condition to the display so as to be displayed.

3. The apparatus as set forth in claim 1, wherein the internal condition includes air pressure and temperature.

4. The apparatus as set forth in claim 1, wherein when the transmitters measure the internal condition of the tires to determine that the change in the internal condition of the tires is out of a predetermined range, the transmitters transmit the condition report signals including the measured internal condition, and
when the receiver receives the condition report signal including the internal condition transmitted from the transmitters, the receiver determines the received internal condition as a current internal condition.

5. The apparatus as set forth in claim 4, wherein the transmitters include:
a plurality of sensors measuring the internal condition of the tires;
when the internal condition measured by the plurality of sensors compares with a reference value to determine that the measured internal condition is out of a predetermined range, a transmitting controller outputting the measured internal condition and chip identifiers and when the measured internal condition is in the predetermined range, outputting the chip identifiers; and
when the internal condition and the chip identifiers are output from the transmitting controller, a transmitting circuit generating and transmitting the condition report signals including the internal condition and when the chip identifiers are output, generating and transmitting the condition report signals that do not include the internal condition.

6. The apparatus as set forth in claim 4, wherein the receiver includes:
a receiving circuit receiving the condition report signals from the transmitters and demodulating, decoding, and outputting the received condition report signals; and
a receiving controller determining the included internal condition as the current internal condition when the condition report signals demodulated and decoded by the receiving circuit include the internal condition, and determining the previously transmitted internal condition of the tires as the current internal condition when the condition report signals do not include the internal condition.

7. The apparatus as set forth in claim 1, wherein the transmitters measure the internal condition of the tires to determine that the change in the internal condition of the tires is in a predetermined range when the change in the condition of the tires is ± 5% or less.

8. The apparatus as set forth in claim 1, wherein the transmitters include:
a plurality of sensors measuring the internal condition of the tires;
when the internal condition measured by the plurality of sensors compares with a reference value to determine that the measured internal condition is in a predetermined range, a transmitting controller outputting chip identifiers; and
when the chip identifiers are output from the transmitting controller, a transmitting circuit generating and transmitting the condition report signals that do not include the internal condition.

9. The apparatus as set forth in claim 1, wherein the receiver includes:
a receiving circuit receiving the condition report signals that do not include the internal condition transmitted from the transmitters and demodulating, decoding, and outputting the received condition report signals; and
a receiving controller receiving the condition report signals that do not include the internal condition demodulated and decoded by the receiving circuit to allow the corresponding transmitters to determine the previously transmitted internal condition of the tires as the current internal condition.

10. A method for monitoring tire conditions, comprising:
(A) when transmitters measure an internal condition of tires to determine that a change in the internal condition of the tires is in a predetermined range, transmitting condition report signals that do not include a measured internal condition; and
(B) when the receiver receives the condition report signals that do not include the internal condition transmitted from the transmitters, determining the internal condition of the tires previously transmitted by the corresponding transmitters as a current internal condition.

11. The method as set forth in claim 10, further comprising: (C) displaying, by a display, the internal condition determined by the receiver.

12. The method as set forth in claim 10, wherein (A) the transmitting of the condition report signals includes:
(A-1) measuring the internal condition of the tires by the plurality of sensors;
(A-2) outputting chip identifiers by a transmitting controller when the internal condition measured by a plurality of sensors is in a predetermined range; and
(A-3) generating and transmitting the condition report signals that do not include the internal condition by a transmitting circuit when the chip identifiers are output from the transmitting controller.

13. The method as set forth in claim 10, wherein (B) the determining of the internal condition includes:
(B-1) receiving the condition report signals from the transmitters and demodulating, decoding, and outputting the received condition report signals by a receiving circuit; and
(B-2) determining the previously transmitted internal condition of the tires as the current internal condition by a receiving controller, when the condition report signals demodulated and decoded by the receiving circuit do not include the internal condition.

14. The method as set forth in claim 10, further comprising:
(D) when the transmitters measure the internal condition of tires to determine that the change in the internal condition of the tires is out of a predetermined range, transmitting condition report signals that include the measured internal condition; and
(E) when the receiver receives the condition report signals that include the internal condition transmitted from the transmitters, determining the received internal condition as the current internal condition.

15. The method as set forth in claim 14, wherein (D) the transmitting of the condition report signals includes:
(D-1) measuring the internal condition of the tires by a plurality of sensors;
(D-2) outputting the measured internal condition and the chip identifiers by a transmitting controller when the internal condition measured by the plurality of sensors is out of a predetermined range; and
(D-3) generating and transmitting the condition report signals including the internal condition by a transmitting circuit when the internal condition and the chip identifiers are output from the transmitting controller.

16. The method as set forth in claim 14, wherein (E) the determining of the received internal condition includes:
(E-1) receiving, demodulating, decoding, and outputting the condition report signals from the transmitters by the receiving circuit; and
(E-2) when the condition report signals demodulated and decoded by the receiving circuit include the internal condition, determining the included internal condition as the current internal condition by the receiving controller.
